# EUROPEAN PATENT SPECIFICATION

(11) **EP 2 157 804 B1**
(45) Date of publication and mention of the grant of the patent: **16.07.2014**
(21) Application number: 08748576.9
(22) Date of filing: 15.05.2008
(51) Int. Cl.: H04Q 1/00, H04M 3/22, H04M 7/00, H04L 12/24, H04L 12/70, H04W 12/02, H04W 24/08, H04L 29/06

(54) **METHOD FOR LICIT MONITORING AND DEVICE THEREOF**
VERFAHREN ZUR ZULÄSSIGKEITSÜBERWACHUNG UND EINRICHTUNG DAFÜR
PROCÉDÉ POUR UNE SURVEILLANCE LICITE ET SON DISPOSITIF

(30) Priority: 08.06.2007 CN 200710110905; 10.08.2007 CN 200710135749
(43) Date of publication of application: 24.02.2010
(73) Proprietor: Huawei Technologies Co., Ltd., Longgang District, Shenzhen Guangdong 518129 (CN)
(72) Inventor: YIN, Yu, Shenzhen Guangdong 518129 (CN); ZHANG, Jin, Shenzhen Guangdong 518129 (CN)
(74) Representative: Isarpatent
(86) International application number: PCT/CN2008/070970
(87) International publication number: WO 2008/151532

(56) References cited:
- WO-A2-02/17036
- CN-A- 1 612 527
- CN-A- 1 671 086
- CN-A- 1 866 882
- CN-A- 101 179 449
- US-A1- 2003 123 388
- CHALMERS D ET AL: "A survey of quality of service in mobile computing environments", IEEE COMMUNICATIONS SURVEYS, IEEE, NEW YORK, NY, US, vol. 2, no. 2, 1 April 1999 (1999-04-01), pages 2-10, XP011285216, ISSN: 1553-877X, DOI: 10.1109/COMST.1999.5340514

## Description

### FIELD OF THE TECHNOLOGY

The present invention relates to the field of mobile communication technologies, and more particularly to a lawful interception method and a lawful interception device thereof.

### BACKGROUND OF THE INVENTION

Lawful interception refers to a mechanism for intercepting a communication system or activities of intercepted users in specific applications in the communication system by state security organs, for example, security bureaus and police bureaus under a legal authorization. For ease of description, in the present invention, the lawful interception is called interception for short.

An interception network is usually formed by an interception center, an interception gateway, and an interception network element (interception NE). The interception NE refers to a communication device that provides services for users, for example, a program control switch in a fixed communication network, a mobile switching center server of a circuit switched domain in a mobile communication network, and a serving general packet radio service (GPRS) supporting node of a packet switched domain. The interception center is an entity for the state security organs to deliver interception commands and receive information about interception targets reported by the network device. The interception gateway is introduced between the interception center and the interception NE, which aims to be adapting and shielding the interception interface difference between the interception center and the interception NE, thereby simplifying the implementation of the interception center and the interception NE.

The information about the interception targets focused by the interception center is divided into two types. One type is control messages, including signaling messages in the process of registering, moving, setup or release sessions of target users in the network. The other type is user plane data, which is transmitted in the service sessions when the target users use the communication services, for example, voice data flows transmitted when the user is making a phone call, and data packets and faxes transmitted between the user and an E-mail server, or the user and a network server when the user accesses the network, and the like.

Usually, a specific process of the interception is as follows.

The interception center delivers an interception task message to the interception gateway, in which the message includes identifiers of interception targets, types of the reported interception data, and so on. The interception gateway forwards the interception task message to the corresponding interception NE. When signaling activities of the interception targets trigger a specified event, the interception NE reports a corresponding control message to the interception gateway, and the interception gateway reports the corresponding control message to the interception center. When the interception targets transmit the user plane data, if the interception gateway requests the interception NE to report the user plane data of the targets, the interception NE reports all the user plane data of the interception targets to the interception gateway, and the interception gateway reports all the user plane data of the targets to the interception center.

In the early circuit switched network, bandwidths occupied by the users when performing services are rather small, that is, the bandwidth occupied by a single user is quite small, and the total bandwidth required is also not large, and thus, even if the interception NE is requested to report all the user plane data of the interception targets that transmit the user plane data, the interception NE does not have heavy performance and cost burdens.

However, as the packet switched network emerges and has developed rapidly, the single user accessing bandwidth provided by the packet switched network becomes increasingly higher, and the interception NE is requested to report all the user plane data of all the interception targets, so that the flow of the reported interception user plane data that needs to be supported by the interception NE becomes increasingly larger accordingly. Meanwhile, due to the special requirements on the completeness and security of the data during the interception, the interception NE has a large processing overhead when reporting the user plane data, so that a design cost of the interception NE is increased. Furthermore, if the flow of the reported interception user plane data is rather large, additional high cost is brought to the operator, the interception fee to be paid is also rather high, thereby further increasing a running cost of using the interception function by the state security organs.

US 2003/0123388 A1 discloses a method of providing call admission control which does not require using MIDCOM protocol methods, packetcable protocols or COPS-RSVP approaches. Each link in a communications network over which it is required to perform call admissions control is provided with a middlebox connected at each end of that link such that admissions control can be carried out at one end of the link. Call services are provided by Call Servers, each of which has access to a database containing pre-specified information about all middleboxes in that call server's realm. The database also has information about maximum bandwidths for the link associated with each middlebox. The call servers are used to keep a running tally of the amount of VolP call bandwidth associated with each middlebox on the edge of a low-bandwidth link, and to accept or refuse calls on the basis of the bandwidth information on a per-call basis. In one embodiment, the method is also able to deal with situations involving lawful intercept whereby calls from a particular entity are intercepted for security or other lawful purposes.

WO 02/17036 A2 discloses a processor architecture for processing data packets representing voice over Internet Protocol (VoIP) calls in a packet-switched network. According to an embodiment, a VoIP processor executes a voice packet processing operating system that is configured to monitor or manipulate the packets at an IP layer, media layer and signaling layer of the call. The VoIP processor includes a plurality of independently callable primitive software functions that carry out low-level VoIP packet processing functions. The VoIP processor executes one or more application programs that selectively call one or more of the primitive software functions and are independent of any underlying protocols of the existing network, thereby isolating the application programs from low-level processing details. In one embodiment, VoIP processor executes a lawful interception application. In this configuration, VoIP processor can dynamically duplicate calls going through it and send the packets associated with a duplicated call, including both signaling layer information and media layer information, to a tapping or tracking system that taps into the calls.

### SUMMARY OF THE INVENTION

Accordingly, the present invention is directed to a lawful interception method and a lawful interception device thereof, which are capable of lowering the flow of user plane data reported during an interception process.

In order to solve the technical problems, the embodiments of the present invention are implemented through the following technical solutions.

An embodiment of the present invention provides a lawful interception method, which includes the following steps.

An interception network element (NE) receives an interception task intercepting interception targets.

The interception NE reports, when congestion occurs in an interception reporting path, user plane data of corresponding service sessions of the interception targets satisfying an interception reporting policy according to the received interception task and the configured interception reporting policy, wherein the configured interception reporting policy comprises designating interception priorities of the interception targets, and reporting all the user plane data of the interception targets with high interception priority.

An embodiment of the present invention further provides an interception NE, which is adapted to report user plane data of interception targets, and includes a receiving unit, an interception reporting policy unit, and a sending unit.

The receiving unit is adapted to receive an interception task intercepting interception targets.

The interception reporting policy unit is adapted to store interception reporting policy.

The sending unit is adapted to report, when congestion occurs in an interception reporting path, user plane data of corresponding service sessions of the interception targets satisfying the interception reporting policy according to the interception reporting policy in the interception reporting policy unit, wherein the configured interception reporting policy comprises designating interception priorities of the interception targets, and reporting all the user plane data of the interception targets with high interception priority.

Through the lawful interception method and the lawful interception device thereof according to the embodiments of the present invention, according to the interception reporting policy, the user plane data of the corresponding service sessions of the interception targets is reported to the interception center, so as to guarantee the reporting of user plane data of interception targets with high interception priorities or significant service sessions, and reduce the flow of the reported user plane data of some insignificant interception targets or insignificant service sessions. Therefore, it is ensured that the user plane data of significant interception targets or significant service sessions can be reported to the interception center at high priorities, thereby lowering a design cost and a running cost of an interception system.

### BRIEF DESCRIPTION OF THE DRAWINGS

FIG. 1 is a flow chart of a lawful interception method according to a first embodiment of the present invention;
FIG. 2 is a flow chart of a lawful interception method according to a second embodiment of the present invention;
FIG. 3 is a flow chart of a lawful interception method according to a third embodiment of the present invention;
FIG. 4 is a flow chart of a lawful interception method according to a fourth embodiment of the present invention;
FIG. 5 is a flow chart of a lawful interception method according to a fifth embodiment of the present invention;
FIG. 6 is a flow chart of a lawful interception method according to a sixth embodiment of the present invention;
FIG. 7 is a flow chart of a lawful interception method according to a seventh embodiment of the present invention;
FIG. 8 is a structural view of a lawful interception system according to an embodiment of the present invention;
FIG. 9 is a structural view of a lawful interception NE according to an embodiment of the present invention;
FIG. 10 is a flow chart of a lawful interception method according to an eighth embodiment of the present invention;
FIG. 11 is a schematic principle view of a lawful interception system according to another embodiment of the present invention; and
FIG. 12 is a structural view of a lawful interception system according to still another embodiment of the present invention.

### DETAILED DESCRIPTION OF THE EMBODIMENTS

In order to make technical solutions of the present invention more comprehensible, the present invention is further described in detail in the following with reference to the accompanying drawings and embodiments.

In an embodiment, the present invention provides a lawful interception method, which includes the following steps. An interception NE receives an interception task intercepting interception targets. The interception NE reports user plane data of corresponding service sessions of the interception targets satisfying the interception reporting policy according to the received interception task and the configured interception reporting policy.

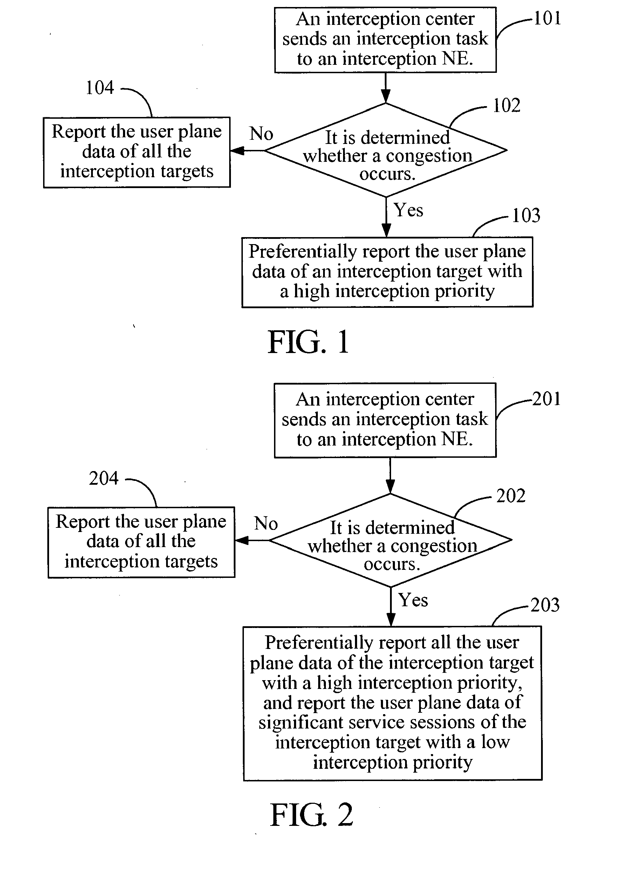

FIG. 1 is a flow chart of a lawful interception method according to a first embodiment of the present invention. Referring to FIG. 1, in this embodiment, the interception reporting policy includes: interception priorities of interception targets are designated, and when congestion occurs in an interception reporting path, an interception NE reports all the user plane data of the interception targets with high interception priorities. The interception reporting policy associated with the interception targets is configured, which included in the interception task received by the interception NE.

A specific process of the lawful interception includes the following steps.

In step 101, an interception center assigns an interception task to an interception NE, requesting the interception NE to intercept interception targets, user A and user B, and designating interception priorities of the interception targets.

For example, the interception priority of the interception target user A is designated to be a high priority, and the interception priority of user B is designated to be a low priority.

The interception center may assign the interception task to the interception NE in the following manners.

In a first manner, the interception center directly assigns the interception task to the interception NE, requesting the interception NE to intercept the target users A and B.

In a second manner, the interception center assigns the interception task of intercepting the target users A and B to an interception gateway; after receiving the interception task sent from the interception center, the interception gateway forwards the interception task to the interception NE.

In step 102, it is determined whether congestion occurs in an interception reporting path, and if yes, the process proceeds to step 103; otherwise, the process proceeds to step 104.

For example, it is determined whether congestion occurs on a reporting interface between the interception NE and the interception center, or on a reporting interface between the interception NE and the interception gateway, or on a reporting interface between the interception gateway and the interception center.

In step 103, the interception NE preferentially reports all the user plane data of user A with the high interception priority according to the designated interception priorities of the interception targets.

In step 104, the interception NE reports all the user plane data of user A and user B to the interception center.

The interception NE may report the user plane data to the interception center in the following manners.

In a first manner, the interception NE directly reports the user plane data to the interception center.

In a second manner, the interception NE reports the user plane data to the interception gateway; after receiving the user plane data reported by the interception NE, the interception gateway forwards the user plane data to the interception center.

FIG. 2 is a flow chart of a lawful interception method according to a second embodiment of the present invention. Referring to FIG. 2, in this embodiment, the interception reporting policy includes: interception priorities of interception targets are designated and interception significance levels of different types of service sessions are configured, and when congestion occurs in an interception reporting path, an interception NE preferentially reports all the user plane data of the interception target with a high interception priority, and the user plane data of significant service sessions of the interception target with a low interception priority.

The interception reporting policy associated with the interception targets is configured, which included in the interception task received by the interception NE.

The interception significance levels of different types of service sessions may be configured in the following manners.

In a first manner, an interception center delivers configuration policy for the interception significance levels of different types of service sessions to the interception NE in advance.

In a second manner, the interception significance levels of different types of service sessions are directly configured on the interception NE in advance.

For example, the interception significance of a voice service is designated as the highest level, the interception significance of a short message service is designated as a lower level, and the interception significances of the other services are designated as the lowest levels.

A specific process of the lawful interception includes the following steps.

In step 201, the interception center assigns an interception task to the interception NE, requesting the interception NE to intercept interception targets, user A and user B, and designating interception priorities of the interception targets.

For example, the interception priority of the interception target user A is designated to be a high priority, and the interception priority of user B is designated to be a low priority.

The interception center may assign the interception task to the interception NE in the following manners.

In a first manner, the interception center directly assigns the interception task of intercepting the target users A and B to the interception NE.

In a second manner, the interception center assigns the interception task of intercepting the target users A and B to an interception gateway; after receiving the interception task sent from the interception center, the interception gateway forwards the interception task to the interception NE.

In step 202, it is determined whether congestion occurs in an interception reporting path, and if yes, the process proceeds to step 203; otherwise, the process proceeds to step 204.

In step 203, the interception NE preferentially reports all the user plane data of user A with the high interception priority, and only reports the user plane data of significant service sessions of user B with the low interception priority, for example, the voice service and the short message service.

In step 204, the interception NE reports all the user plane data of user A and user B to the interception center.

The interception NE may report the user plane data to the interception center in the following manners.

In a first manner, the interception NE directly reports the user plane data to the interception center.

In a second manner, the interception NE reports the user plane data to the interception gateway; after receiving the user plane data reported by the interception NE, the interception gateway forwards the user plane data to the interception center.

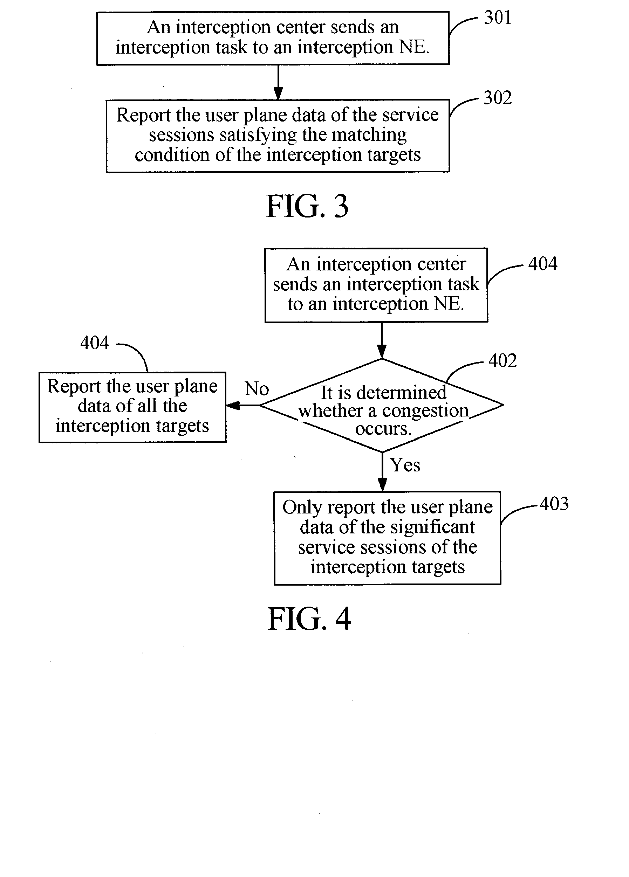

FIG. 3 is a flow chart of a lawful interception method according to a third embodiment of the present invention. Referring to FIG. 3, in this embodiment, the interception reporting policy includes: an interception center designates matching condition for service sessions of each interception target, and an interception NE only reports the user plane data of the service sessions satisfying the matching condition. The interception reporting policy associated with the interception targets is configured, which included in the interception task received by the interception NE.

A specific process of the lawful interception includes the following steps.

In step 301, the interception center assigns an interception task to the interception NE, requesting the interception NE to intercept interception targets, user A and user B, and designating matching condition for service sessions of each interception target.

For example, it is designated that the interception NE reports the user plane data of a voice service and an Internet service of user A, and the interception NE reports the user plane data of a voice service and a video telephony service of user B.

The interception center may assign the interception task to the interception NE in the following manners.

In a first manner, the interception center directly assigns the interception task of intercepting the target users A and B to the interception NE.

In a second manner, the interception center assigns the interception task of intercepting the target users A and B to an interception gateway; after receiving the interception task sent from the interception center, the interception gateway forwards the interception task to the interception NE.

In step 302, the interception NE only reports the user plane data of service sessions satisfying the matching condition of each interception target.

For example, the interception NE only reports the user plane data of the voice service and Internet service sessions of user A, and the interception NE only reports the user plane data of the voice service and video telephony service sessions of user B.

The interception NE may report the user plane data to the interception center in the following manners.

In a first manner, the interception NE directly reports the user plane data to the interception center.

In a second manner, the interception NE reports the user plane data to the interception gateway; after receiving the user plane data reported by the interception NE, the interception gateway forwards the user plane data to the interception center.

FIG. 4 is a flow chart of a lawful interception method according to a fourth embodiment of the present invention. Referring to FIG. 4, in this embodiment, the interception reporting policy includes: interception significance levels for different types of service sessions are configured, and when congestion occurs in an interception reporting path, an interception NE preferentially reports the user plane data of service sessions with high interception significance levels of the interception targets.

The interception significance levels for different types of service sessions may be configured in the following manners.

In a first manner, an interception center delivers a configuration policy for the interception significance levels of different types of service sessions to the interception NE in advance.

In a second manner, the interception significance levels of different types of service sessions are directly configured on the interception NE in advance.

For example, the interception significance of a voice service is configured as the highest level, the interception significance of a video telephony service is configured as a lower level, and the interception significances of the other services are configured as the lowest level.

A specific process of the lawful interception includes the following steps.

In step 401, the interception center assigns an interception task to the interception NE, requesting the interception NE to intercept interception targets, that is, user A and user B.

The interception center may assign the interception task to the interception NE in the following manners.

In a first manner, the interception center directly assigns the interception task of intercepting the target users A and B to the interception NE.

In a second manner, the interception center assigns the interception task of intercepting the target users A and B to an interception gateway; after receiving the interception task sent from the interception center, the interception gateway forwards the interception task to the interception NE.

In step 402, it is determined whether congestion occurs in an interception reporting path, and if yes, the process proceeds to step 403; the process proceeds to step 404.

In step 403, the interception NE preferentially reports the user plane data of the voice service and the video telephony service of user A and user B according to the configured interception significance levels of different types of service sessions.

In step 404, the interception NE reports all the user plane data of user A and user B to the interception center.

The interception NE may report the user plane data to the interception center in the following manners.

In a first manner, the interception NE directly reports the user plane data to the interception center.

In a second manner, the interception NE reports the user plane data to the interception gateway; after receiving the user plane data reported by the interception NE, the interception gateway forwards the user plane data to the interception center.

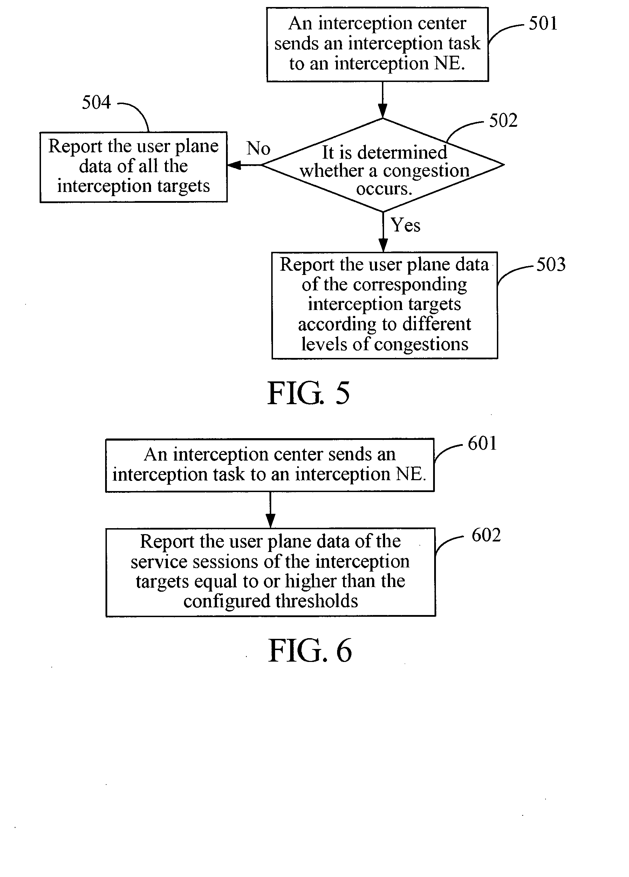

FIG. 5 is a flow chart of a lawful interception method according to a fifth embodiment of the present invention. Referring to FIG. 5, in this embodiment, the interception reporting policy includes: priorities for interception targets are designated, interception significance levels for different types of service sessions are configured, and reporting policies of the user plane data of interception targets with different priorities for different levels of congestions are configured; when congestion occurs in an interception reporting path, an interception NE reports the user plane data of corresponding service sessions of the interception targets according to the reporting policies of the user plane data of the interception targets with different interception priorities configured for different levels of congestions.

The interception reporting policy associated with the interception targets is configured, which included in the interception task received by the interception NE.

The interception significance levels for different types of service sessions and the reporting policies of the user plane data of interception targets with different priorities for different levels of congestions at the interception interfaces may be configured in the following manners.

In a first manner, an interception center delivers configuration policy of the interception significance levels of different types of service sessions and the reporting policies of the user plane data of interception targets with different priorities to the interception NE in advance.

In a second manner, the interception significance levels of different types of service sessions and the reporting policies of the user plane data of interception targets with different priorities are directly configured on the interception NE in advance.

For example, the interception significance of a voice service is designated as the highest level, the interception significance of a video telephony service is designated as a lower level, and the interception significances of the other services are designated as the lowest level. It is configured that when an interception congestion level is higher, the interception NE reports the user plane data of the voice service and the video telephony service of a user with a high priority, and does not report any user plane data of a user with a low priority; when the interception congestion level is lower, the interception NE reports the user plane data of all types of service sessions of the user with the high priority, and only reports the user plane data of the voice service of the user with the low priority.

A specific process of the lawful interception includes the following steps.

In step 501, the interception center assigns an interception task to the interception NE, requesting the interception NE to intercept interception targets, that is, user A and user B, and designating interception priorities for the interception targets.

For example, the interception priority of the interception target user A is designated to be a high priority, and the interception priority of user B is designated to be a low priority.

The interception center may assign the interception task to the interception NE in the following manners.

In a first manner, the interception center directly assigns the interception task of intercepting the target users A and B to the interception NE.

In a second manner, the interception center assigns the interception task of intercepting the target users A and B to an interception gateway; after receiving the interception task sent from the interception center, the interception gateway forwards the interception task to the interception NE.

In step 502, it is determined whether congestion occurs in an interception reporting path, and if yes, the process proceeds to step 503; otherwise, the process proceeds to step 504.

In step 503, the interception NE reports the user plane data of corresponding service sessions of the interception targets according to the configured reporting policies of the user plane data of the interception targets with different interception priorities for different levels of congestions.

For example, when an interception congestion level is higher, the interception NE reports the user plane data of the voice service and the video telephony service of user A, and does not report any user plane data of user B. When the interception congestion level is lower, the interception NE reports the user plane data of all types of service sessions of user A, and only reports the user plane data of the voice service of user B.

In step 504, the interception NE reports all the user plane data of user A and user B to the interception center.

The interception NE may report the user plane data to the interception center in the following manners.

In a first manner, the interception NE directly reports the user plane data to the interception center.

In a second manner, the interception NE reports the user plane data to the interception gateway; after receiving the user plane data reported by the interception NE, the interception gateway forwards the user plane data to the interception center.

FIG. 6 is a flow chart of a lawful interception method according to a sixth embodiment of the present invention. Referring to FIG. 6, in this embodiment, the interception reporting policy includes: priorities for interception targets are designated, interception significance levels for different types of service sessions are configured, and report thresholds for the interception targets with different priorities are configured, in which an interception NE reports the user plane data of service sessions of the interception targets equal to or higher than the corresponding thresholds.

The interception reporting policy associated with the interception targets is configured, which included in the interception task received by the interception NE.

The interception significance levels for different types of service sessions and the report thresholds for the interception targets with different priorities may be configured in the following manners.

In a first manner, an interception center delivers configuration policy for the interception significance levels of different types of service sessions and the report thresholds of the interception targets with different priorities to the interception NE in advance.

In a second manner, the interception significance levels of different types of service sessions and the report thresholds of the interception targets with different priorities are directly configured on the interception NE in advance.

For example, the interception significance of a voice service is configured as the highest level, the interception significance of a video telephony service is configured as a lower level, the interception significance of a wireless application protocol (WAP) service is configured as an even lower level, and the interception significances of the other services are configured as the lowest level. The report threshold of the interception target with the high interception priority is designated to be the WAP, and the report threshold of the interception target with the low interception priority is designated to be the video telephony service.

A specific process of the lawful interception includes the following steps.

In step 601, the interception center assigns an interception task to the interception NE, requesting the interception NE to intercept interception targets, that is, user A and user B, and designating priorities for the interception targets.

For example, the interception priority of the interception target user A is designated to be a high priority, and the interception priority of user B is designated to be a low priority.

The interception center may assign the interception task to the interception NE in the following manners.

In a first manner, the interception center directly assigns the interception task of intercepting the target users A and B to the interception NE.

In a second manner, the interception center assigns the interception task of intercepting the target users A and B to an interception gateway; after receiving the interception task sent from the interception center, the interception gateway forwards the interception task to the interception NE.

In step 602, the interception NE reports the user plane data of service sessions of the interception targets equal to or higher than the configured thresholds.

For example, the interception NE reports the user plane data of the voice, video telephony, and WAP services of user A, and reports the user plane data of the voice and video telephony services of user B.

The interception NE may report the user plane data to the interception center in the following manners.

In a first manner, the interception NE directly reports the user plane data to the interception center.

In a second manner, the interception NE reports the user plane data to the interception gateway; after receiving the user plane data reported by the interception NE, the interception gateway forwards the user plane data to the interception center.

Through the lawful interception method according to the embodiments of the present invention, according to the interception reporting policy, the user plane data of corresponding service sessions of the interception targets satisfying the interception reporting policy is reported to the interception center, so as to reduce the reporting flow of the user plane data of some insignificant interception targets or insignificant service sessions, thereby lowering a design cost and a running cost of an interception system.

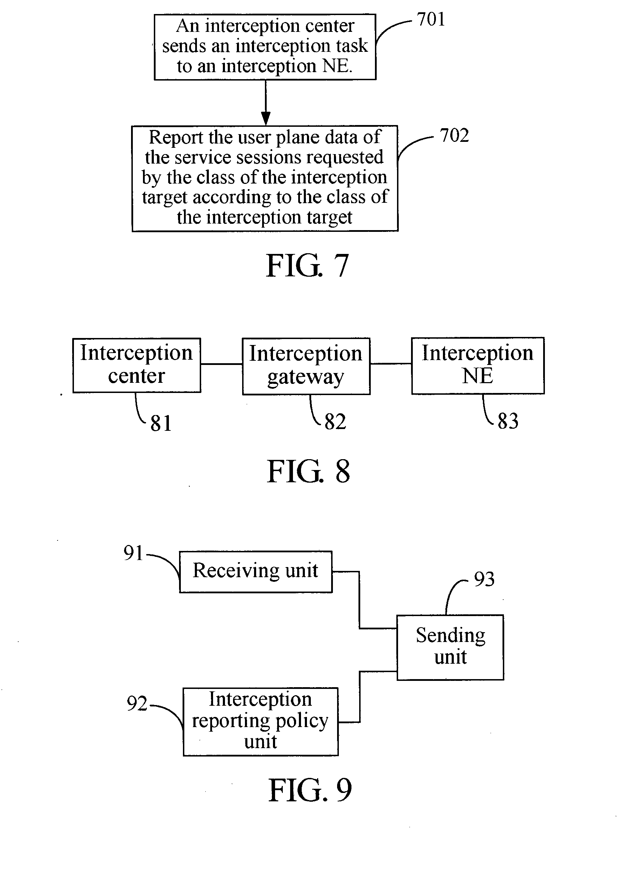

FIG. 7 is a flow chart of a lawful interception method according to a seventh embodiment of the present invention. Referring to FIG. 7, in this embodiment, the interception reporting policy includes: classes of interception targets are configuring, and a service session type for being reported to an interception center for each class of the interception target is configured, in which an interception NE only reports the user plane data of the service session type requested by the class of the interception target according to the class of the interception target.

The interception reporting policy associated with the interception targets is configured, which included in the interception task received by the interception NE.

The service session type for being reported to the interception center may be configured for each class of the interception target in the following manners.

In a first manner, the interception center delivers the service session type for being reported to the interception center for each class of the interception target to the interception NE in advance.

In a second manner, the service session type for being reported to the interception center for each class of the interception target is directly configured on the interception NE in advance.

For example, the user plane data of a voice service of the interception target is designated as a first class that needs to be reported, and the user plane data of a video telephony service of the interception target is designated as a second class that needs to be reported.

A specific process of the lawful interception includes the following steps.

In step 701, the interception center assigns an interception task to the interception NE, requesting the interception NE to intercept interception targets, that is, user A and user B, and designating classes of the interception targets.

For example, the interception class of the interception target user A is designated as the first class, and the interception class of user B is designated as the second class.

When delivering the interception targets, the interception center also delivers indices of the classes of the interception targets to designate the classes of the interception targets.

The interception center may assign the interception task to the interception NE in the following manners.

In a first manner, the interception center directly assigns the interception task of intercepting the target users A and B to the interception NE.

In a second manner, the interception center assigns the interception task of intercepting the target users A and B to an interception gateway; after receiving the interception task sent from the interception center, the interception gateway forwards the interception task to the interception NE.

In step 702, the interception NE reports the user plane data corresponding to the interception targets.

For example, the interception NE reports the user plane data of the voice service of user A, and reports the user plane data of the video telephony service of user B.

The interception NE may report the user plane data to the interception center in the following manners.

In a first manner, the interception NE directly reports the user plane data to the interception center.

In a second manner, the interception NE reports the user plane data to the interception gateway; after receiving the user plane data reported by the interception NE, the interception gateway forwards the user plane data to the interception center.

FIG. 8 is a structural view of a lawful interception system according to an embodiment of the present invention. Referring to FIG. 8, the lawful interception system includes an interception center 81, an interception gateway 82, and an interception NE 83.

The interception center 81 is adapted to send an interception task of intercepting interception targets. The interception NE 83 is adapted to report user plane data of corresponding service sessions of the interception targets satisfying the configured interception reporting policy to the interception center 81, according to the received interception task and the interception reporting policy. The interception gateway 82 is adapted to receive the interception task of intercepting the interception targets sent from the interception center 81 and forward the interception task to the interception NE 83, and is adapted to receive the user plane data of the corresponding service sessions of the interception targets reported by the interception NE 83 and forward the user plane data to the interception center 81.

FIG. 9 is a structural view of a lawful interception NE according to an embodiment of the present invention. Referring to FIG. 9, the interception NE includes a receiving unit 91, an interception reporting policy unit 92, and a sending unit 93.

The receiving unit 91 is adapted to receive an interception task of intercepting interception targets. The interception reporting policy unit 92 is adapted to store an interception reporting policy. The sending unit 93 is adapted to report user plane data of corresponding service sessions of the interception targets satisfying the interception reporting policy according to the interception reporting policy in the interception reporting policy unit 92.

In another embodiment, the lawful interception NE according to the present invention further includes a classifying unit and an adding unit. In this embodiment, the receiving unit is further adapted to receive user plane data sent from the interception targets or to be forwarded to the interception targets. The classifying unit is adapted to classify the user plane data received by the receiving unit according to traffic flows based on service feature information. The adding unit is adapted to add a service associated identifier to the user plane data classified by the classifying unit, in which the service associated identifier is adapted to identify the traffic flow of the user plane data. The sending unit reports the user plane data with the service associated identifier added by the adding unit.

In still another embodiment, the lawful interception NE according to the present invention further includes a priority discrimination unit, adapted to discriminate priorities of interception targets. When congestion occurs in an interception reporting path, the sending unit reports all the user plane data of an interception target with a high interception priority.

In still another embodiment, the lawful interception NE according to the present invention further includes an interception significance level dividing unit, adapted to divide interception significance levels for interception targets. When congestion occurs in an interception reporting path, the sending unit preferentially reports the user plane data of service sessions with high interception significance levels of the interception targets.

In still another embodiment, the lawful interception NE according to the present invention further includes an interception target class configuration unit, adapted to configure a service session type for being reported to an interception center for each class of the interception target. The sending unit reports the user plane data of the service session type configured for the class of the interception target according to the class of the interception target.

In still another embodiment, the lawful interception NE according to the present invention further includes a service session condition matching unit, adapted to designate a service session matching condition for each interception target. The sending unit only reports the user plane data of the service sessions satisfying the matching condition of the interception target.

Through the lawful interception NE according to the embodiment of the present invention, according to the interception reporting policy, the user plane data of the corresponding service sessions of the interception targets satisfying the interception reporting policy is reported to the interception center, so as to reduce the reporting flow of the user plane data of some insignificant interception targets or insignificant service sessions, thereby lowering a design cost and a running cost of an interception system.

To sum up, through the lawful interception method and the interception NE according to the embodiments of the present invention, according to the interception reporting policy, the user plane data of the corresponding service sessions of the interception targets satisfying the interception reporting policy is reported to the interception center, so as to reduce the reporting flow of the user plane data of some insignificant interception targets or insignificant service sessions, thereby lowering the design cost and the running cost of an interception system.

Currently, a public communication network is divided into a circuit switched domain and a packet switched domain. The conventional circuit switched domain mainly bears the voice, and the newly emerged packet switched domain bears the packet switched Internet Protocol (IP) services, for example, IP access, multimedia short message, and video on demand. According to different access network techniques, the packet switched domain is further divided into two modes, that is, fixed access and mobile access. The fixed access is the so-called broadband access, and a wireless local area network (WLAN) also belongs to the fixed access. The mobile access is the packet access provided by a mobile communication network. Due to the advantages in cost, flexibility, and other aspects, the packet switched domain network has become a future trend of the public communication network, and the circuit switched domain will gradually disappear. Accordingly, the services originally borne on the circuit switched domain network, for example, the voice service and short message service, will be migrated to the packet switched domain.

Therefore, in the current packet switched network, when the lawful interception user plane data is reported to the interception center, if all the user plane data of the user is reported to the interception center as in the prior art, the interception center needs to analyze all the data packets, and try to restore the original service information.

The services of the packet switched domain, particularly the services on Internet, are of various types. Different services have different coding formats, signaling processes, encryption algorithms, and other features. The interception center analyzes from an IP layer under a situation of totally unknowing about the services used by the interception users, so that technical difficulties and an operation amount in the analysis are rather large. Furthermore, the services possibly cannot be restored due to the insufficient information, thereby increasing an implementation complexity and performance requirements for the interception center device. In addition, in certain packet switched domain network, in order to provide different quality of service (QoS) for different classes of services, a plurality of bearers is set up between the terminals and the public data network, so as to converge a plurality of user data flows with similar QoS requirements to be transmitted on one bearer, for example, the terminals are connected to the service network of the operator through one bearer, and meanwhile visit websites, send multimedia short messages, and send/receive E-mails through the bearer. Therefore, even if the user plane data of the interception targets after being classified is reported to the interception center according to granularities of the bearers, the interception center still needs to perform traffic classification on the user interface data based on the services, and then performs the subsequent analyzing process.

As an IP multimedia subsystem (IMS) domain is introduced, the telecommunication operators begin to deploy their services on the packet switched domain, for example, packet voice services. For the packet services controlled by the operators themselves, the network device can discriminate the classification features of different traffic flows, coding formats used by the traffic flows, and other information. Therefore, for the services controlled by the operators, if the user packets are organized in the form of traffic flows, then reported to the interception center, and the interception center is enabled to be associated with the coding formats corresponding to the traffic flows and other information, it is helpful for lowering the difficulty of restoring the services by the interception center.

For the above situation, in an embodiment, the present invention provides a lawful interception method, in which an interception center does not need to perform traffic classification on the reported user plane data according to the services, thereby improving a success ratio of assigning and restoring the services by the interception center, lowering the design cost and the running cost of the interception center, and lowering the complexity of restoring the services by the interception center for the services controlled by certain operators.

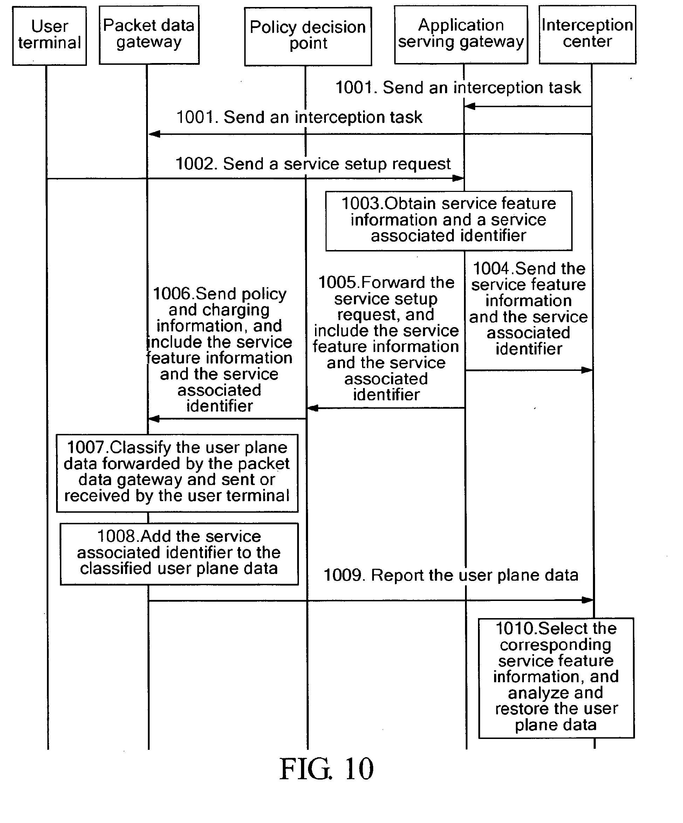

FIG. 10 is a flow chart of a lawful interception method according to an eighth embodiment of the present invention. Referring to FIG. 10, the method includes the following steps.

In step 1001, an interception center delivers an interception task to an application serving gateway and a packet data gateway.

The interception center may directly deliver the interception task to the application serving gateway and the packet data gateway, and may also deliver the interception task to the application serving gateway and the packet data gateway through an interception gateway, so as to request intercepting user plane data of a certain interception target. In this embodiment, the interception target is a user terminal of a packet switched network.

In step 1002, the application serving gateway receives a service setup request of initiating a call by the user terminal.

The application serving gateway may also receive a service setup request of calling the user terminal by a peer end.

The user terminal may be a mobile terminal, and the corresponding packet data switching network is a mobile network. The user terminal may also be a fixed terminal, and the corresponding packet data switching network is a fixed network. The peer end refers to a terminal that sets up a service connection with the user terminal, which may be a mobile terminal or a fixed terminal, and may also be a File Transfer Protocol (FTP) server or a video on demand server.

The interception center may deliver the interception task to the application serving gateway or the packet data gateway at any moment, so that step 1001 and step 1002 do not have a time sequence relation. If the interception target is performing a service when the interception center delivers the interception task, the application serving gateway and the packet data gateway report the feature information of the current service of the interception target to the interception center.

In step 1003, the application serving gateway parses the service setup request, obtains service feature information, and generates a service associated identifier according to composing fields of the service associated identifier in the service feature information.

The service feature information includes a feature filtering condition corresponding to the service class, the composing fields of the service associated identifier, the coding format and encryption algorithm of the service, and other information. The feature filtering condition includes a protocol type, an address of the interception target, a protocol port number of the interception target, an address of a peer end of the interception target, and a protocol port number of the peer end of the interception target. For example, a universal service feature information description protocol is defined in RFC 4566 "Session Description Protocol (SDP)". In the service feature information description protocol, the feature filtering condition includes the address and the port number of the interception target, the address and the port number of the peer end of the interception target, a protocol type, and a data packet direction (uplink/downlink). The feature filtering condition is allowed to use wildcard masks.

Different services have different feature information, so that the service type of the user plane data can be discriminated according to the service feature information. According to the feature filtering condition, the traffic flows may be classified.

The service associated identifier is generated according to the composing fields of the service associated identifier in the service feature information, so that the service associated identifier is corresponding to the service feature information and identifies the service type of the user plane data.

Taking an IMS domain as an example, a proxy-call session control function (P-CSCF) is equivalent to the application serving gateway, and the P-CSCF assigns an IMS charging identifier (ICID) for each service data flow, so as to uniquely identify the service data flow. One service data flow may include a plurality of media flows, for example, an audio flow and a video flow, and one media flow may further include one or more IP flows, for example, a Real Time Transport Protocol (RTP) flow and a Real Time Transport Control Protocol (RTCP) flow. In the IMS, a media flow number (Media-Component-Number) field may uniquely identify the media flow in a service data flow, an IP flow number (Flow-Number) field may uniquely identify the IP flow in a media flow, and the media flow number and the IP flow number are delivered to the packet data gateway by the P-CSCF through a policy decision point, so that a field combination of ICID + media flow number + IP flow number may globally identify an IP flow uniquely. For the service feature information, in the SDP, the coding algorithm and other feature information required when the interception center performs the analysis and restoring are defined according to the granularities of the IP flows. Therefore, the field combination of ICID + media flow number + IP flow number is taken as the service associated identifier, and the packet data gateway filters the user data packets according to the granularities of the IP flows, and adds the same service associated identifier (ICID + media flow number + IP flow number) to the user data packets belonging to the same IP flow, so that the interception center conveniently positions the feature information corresponding to the IP flow reported by the P-CSCF, so as to perform the service restoring. In practical implementation, if a length of the service associated identifier is too long, the additionally added information when the packet data gateway reports the user plane data of the interception targets to the interception center is increased, and the transmission efficiency is somewhat reduced. Thus, during the practical implementation, considering a balance of an implementation complexity of the interception center and the transmission efficiency from the packet data gateway to the interception center, it may be flexibly determined whether the packet data gateway reports the user plane data of the interception targets to the interception center according to the granularity of the service data flow, the media flow, or the IP flow. When the granularity of the service data flow is adopted, the service associated identifier may adopt the ICID. When the granularity of the media flow is adopted, the service associated identifier may adopt ICID + media flow number. When the granularity of the IP flow is adopted, the service associated identifier may adopt ICID + media flow number + IP flow number.

In the above example, the service data flow, the media flow, and the IP flow in the IMS domain are discriminated according to different granularities of the user plane service data, which are all called traffic flows in the embodiments of the present invention.

The service associated identifier may be formed by other self-defined characters or wildcards adapted to identify the traffic flow of the user plane data. For example, "#" is defined to identify voice data, "*" is defined to identify video data. For example, "1" is defined to identify the voice data, "2" is defined to identify the video data, and "3" is defined to identify the Internet service.

In step 1004, the application serving gateway reports the service setup request to the interception center, and which includes the feature filtering condition, the coding format, the encryption algorithm, and the composing fields of the service associated identifier in the obtained service feature information.

In step 1005, the application serving gateway delivers the service setup request to a policy decision point, and which includes the feature filtering condition and the composing fields of the service associated identifier in the service feature information.

In step 1006, after making a decision according to user subscription information and local policy, the policy decision point delivers the composing fields of the service associated identifier, QoS, and charging policy information in the service feature information to the packet data gateway together.

The policy decision point decides the QoS and the charging policy of the traffic flow according to the user information subscribed by the user in advance in a policy decision database together with the feature filtering condition and QoS parameters in the service feature information delivered by the application serving gateway.

Step 1005 and step 1006 do not have a time sequence relation when being performed. Step 1005 and step 1006 may be performed at the same time, or step 1005 may be firstly performed and then step 1006 is performed, or step 1006 may be firstly performed and then step 1005 is performed.

In step 1007, the packet data gateway classifies the user plane data forwarded by itself and sent or received by the user terminals based on the traffic flows.

Specifically, the classification in step 1007 is as follows: according to the feature filtering condition in the service feature information delivered by the application serving gateway through the policy decision point, the packet data gateway classifies the user plane data of the interception target based on the traffic flows.

The packet data network assigns a bearing resource capable of ensuring the QoS to the classified user plane data, and the user terminal transmits the user plane data to the peer end through the bearing resource, and reports the corresponding charging information to a charging system.

In step 1008, the packet data network adds the service associated identifier to the classified user plane data.

The service associated identifier is added to any position of the classified user plane data.

In step 1009, the packet data gateway reports the user plane data added with the service associated identifier to the interception center.

In step 1010, the interception center selects the corresponding service feature information according to the service associated identifier of the user plane data, and analyzes and restores the user plane data.

The service associated identifier is generated according to the composing fields of the service associated identifier in the service feature information. Thus, according to the service associated identifier, the corresponding service feature information is selected as the feature information for analyzing and restoring the user plane data.

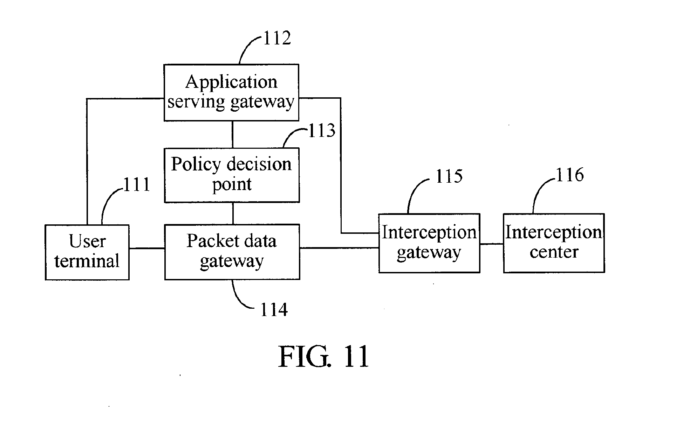

FIG. 11 is a schematic principle view of a lawful interception system according to another embodiment of the present invention.

Referring to FIG. 11, the lawful interception system includes a user terminal 111, an application serving gateway 112, a policy decision point 113, a packet data gateway 114, an interception gateway 115, and an interception center 116.

In this embodiment, the user terminal 111 serves as an interception target, and user plane data sent or received by the user terminal 111 is intercepted. The interception center 116 respectively delivers an interception task of intercepting the user terminal 111 to the packet data gateway 114 and the application serving gateway 112 through the interception gateway 115. The application serving gateway 112 parses a service setup request of initiating a call by the user terminal 111 or calling the user terminal 111, obtains service feature information, and provides the service feature information of the user plane data to the policy decision point 113 and the interception gateway 115. After making a decision according to user subscription information, the policy decision point 113 delivers policy and charging information to the packet data gateway 114, and the policy and charging information includes the service feature information. The interception gateway 115 forwards the service feature information to the interception center 116. The packet data gateway 114 classifies the user plane data forwarded by itself and sent or received by the user terminal 111 based on traffic flows according to the service feature information, adds a service associated identifier, and then reports the user plane data to the interception center 116 through the interception gateway 115. The interception center 116 selects the corresponding service feature information according to the service associated identifier of the user plane data, and analyzes and restores the user plane data.

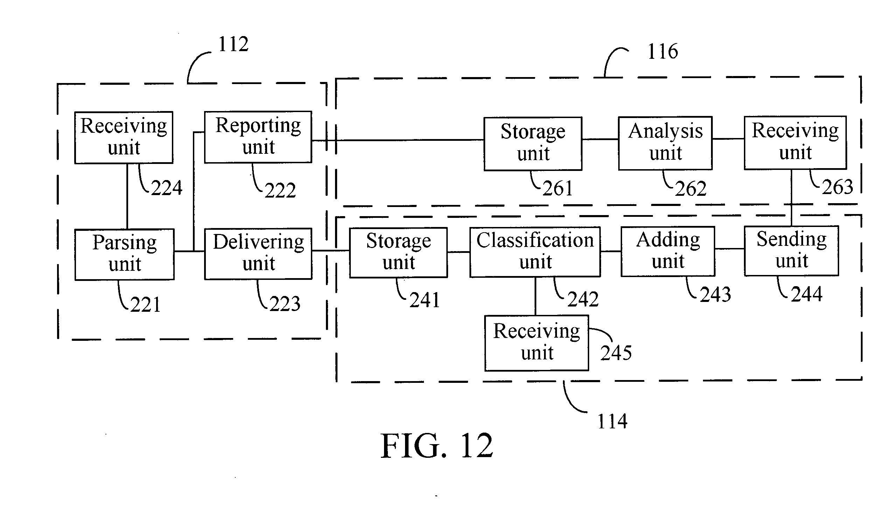

FIG. 12 is a structural view of a lawful interception system according to still another embodiment of the present invention.

Referring to FIG. 12, the application serving gateway 112 includes a parsing unit 221, a reporting unit 222, a delivering unit 223, and a receiving unit 224.

The receiving unit 224 is adapted to receive a service setup request of initiating a call by an interception target or calling the interception target.

The parsing unit 221 is adapted to parse the service setup request received by the receiving unit 224, obtain service feature information, and generate a service associated identifier according to composing fields of the service associated identifier in the service feature information.

The service feature information includes a feature filtering condition corresponding to a service class, the composing fields of the service associated identifier, coding format and encryption algorithm of the service, and other information. The feature filtering condition includes a protocol type, an address of the interception target, and an address of a peer end of the interception target. Different services have different feature information, so that the service types of the user plane data are discriminated according to the service feature information. According to the feature filtering condition, traffic flows may be classified. The service associated identifier is generated according to the composing fields of the service associated identifier in the service feature information, so that the service associated identifier is corresponding to the service feature information and identifies the service type of the user plane data.

The reporting unit 222 is adapted to report the service setup request to the interception center, and which includes the feature filtering condition, the coding format, the encryption algorithm, and the composing fields of the service associated identifier in the service feature information obtained by the parsing unit 221.

The delivering unit 223 is adapted to deliver the service setup request to the packet data gateway 114, and which includes the feature filtering condition and the composing fields of the service associated identifier in the service feature information obtained by the parsing unit 221.

The packet data gateway 114 includes a storage unit 241, a classifying unit 242, an adding unit 243, a sending unit 244, and a receiving unit 245.

The storage unit 241 is adapted to receive the service feature information delivered by the application serving gateway 112.

The receiving unit 245 is adapted to receive the user plane data sent from the interception target or to be forwarded to the interception target.

The classifying unit 242 is adapted to classify the user plane data received by the receiving unit 245 according to the traffic flows based on the service feature information in the storage unit 241.

The adding unit 243 is adapted to add the service associated identifier to the user plane data classified by the classifying unit 242.

The sending unit 244 is adapted to report the user plane data with the service associated identifier added by the adding unit to the interception center 116.

The interception center 116 includes a storage unit 261, a receiving unit 263, and an analyzing unit 262.

The storage unit 261 is adapted to receive the service feature information delivered by the application serving gateway 112.

The receiving unit 263 is adapted to receive the user plane data added with the service associated identifier sent from the packet data gateway 114.

The analyzing unit 262 is adapted to select the corresponding service feature information according to the service associated identifier of the user plane data received by the receiving unit 263, and analyze and restore the user plane data.

To sum up, through the lawful interception method, the lawful interception system, the packet data gateway, and the interception center according to the embodiments of the present invention, the packet data gateway classifies the user plane data of the interception targets based on the traffic flows, adds the service associated identifier, and reports the user plane data to the interception center. The interception center selects the corresponding service feature information according to the service associated identifier of the user plane data, and analyzes and restores the user plane data. Therefore, the interception center does not need to perform the traffic classification on the user plane data based on the services, thereby lowering the design cost and the running cost of the interception center.

When any one of the first to seventh embodiments of the lawful interception method according to the present invention is combined with the eighth embodiment of the lawful interception method of the present invention, the flow of the reported user plane data during the interception process is further lowered, and the interception center does not need to perform the traffic classification on the reported user plane data based on the services, thereby lowering the design cost and the running cost of the interception system, and further reducing the complexity for the interception center to restore the service controlled by certain operator.

The lawful interception method and the interception NE of the present invention are described in detail above. The principle and implementation of the present invention are described herein through specific examples. The description about the embodiments of the present invention is merely provided to facilitate the understanding of the technical solutions of the present invention. Persons of ordinary skill in the art can make variations and modifications to the present invention in terms of the specific implementations and application scopes according to the ideas of the present invention. Therefore, the specification shall not be construed as limitations to the present invention.

## Claims

1. A lawful interception method, comprising:
intercepting, by an interception network element, NE, interception targets, after receiving an interception task; and
reporting (103), when congestion occurs in an interception reporting path, by the interception NE, user plane data of corresponding service sessions of the interception targets satisfying configured interception reporting policy according to the received interception task and the configured interception reporting policy, wherein the configured interception reporting policy comprises designating interception priorities of the interception targets, and reporting all the user plane data only of those interception targets with high interception priority.

2. The lawful interception method according to claim 1, wherein the interception reporting policy further comprises:
configuring interception significance levels of different types of service sessions, and reporting, by the interception NE, preferentially, the user plane data of significant service sessions of the interception target with low interception priority along with all the user plane data of the interception targets with high interception priority.

3. The lawful interception method according to claim 1 or 2, wherein a configuration manner of the interception reporting policy comprises at least one of:
receiving, by the interception NE, the interception task carrying the interception reporting policy associated with the interception targets;
receiving, by the interception NE, the interception reporting policy associated with the service session types in advance; and
configuring the interception reporting policy associated with the service session types on the interception NE in advance.

4. The lawful interception method according to claim 1, wherein
the interception task received by the interception NE is directly sent from an interception center to the interception NE; or
the interception task received by the interception NE is sent from an interception center to an interception gateway, and is forwarded to the interception NE by the interception gateway.

5. The lawful interception method according to claim 1, wherein the interception NE directly reports the user plane data of the interception targets to an interception center; or
the interception NE reports (702) the user plane data of the interception targets to an interception gateway, and the interception gateway forwards the user plane data to an interception center.

6. The lawful interception method according to claim 1, wherein the interception NE is a packet data gateway, and the method further comprises:
classifying, by the packet data gateway, user plane data forwarded by the packet data gateway and sent or received by the interception targets based on traffic flows; and
adding, by the packet data gateway, a service associated identifier to the classified user plane data, wherein the service associated identifier is adapted to identify the traffic flow of the user plane data.

7. The lawful interception method according to claim 6, further comprising:
receiving, by an application serving gateway, the interception task sent from an interception center;
parsing, by the application serving gateway, a service setup request of initiating a call by the interception target or calling the interception target according to the interception task, obtaining service feature information, and generating the service associated identifier according to the service feature information; and
reporting, by the application serving gateway, the service setup request to the interception center, wherein the service setup request carries a part of or all composing fields in the service feature information, and delivering the service setup request to the packet data gateway, wherein the service setup request includes a part of or all the composing fields in the service feature information.

8. The lawful interception method according to claim 7, wherein the generating, by the application serving gateway, the service associated identifier according to the service feature information comprises one of
generating, by the application serving gateway, the service associated identifier by adopting an Internet Protocol, IP, multimedia subsystem, IMS, charging identifier in the service feature information;
generating, by the application serving gateway, the service associated identifier by adopting an IMS charging identifier and a media flow number together in the service feature information; and
generating, by the application serving gateway, the service associated identifier by adopting an IMS charging identifier, a media flow number, and an IP flow number together in the service feature information.

9. The lawful interception method according to claim 7, wherein the delivering, by the application serving gateway, the service setup request to the packet data gateway comprises:
delivering, by the application serving gateway, the service setup request to a policy decision point; and
delivering, by the policy decision point, the composing fields in the service feature information to the packet data gateway according to user subscription information and local policy.

10. The lawful interception method according to any one of claims 7 to 9, further comprising:
selecting, by the interception center, service feature information corresponding to the service associated identifier according to the service associated identifier of the user plane data; and
analyzing and restoring, by the interception center, the user plane data according to the service feature information.

11. An interception network element, NE, (83) adapted to report user plane data of interception targets, comprising:
a receiving unit (91), adapted to receive an interception task of intercepting interception targets;
an interception reporting policy unit (92), adapted to store interception reporting policy; and
a sending unit (93), adapted to report, when congestion occurs in an interception reporting path, user plane data of corresponding service sessions of the interception targets satisfying the interception reporting policy according to the interception reporting policy in the interception reporting policy unit, wherein the configured interception reporting policy comprises designating interception priorities of the interception targets, and reporting all the user plane data only of those interception targets with high interception priority.

12. The interception NE (83) according to claim 11, wherein the receiving unit (91) is further adapted to receive the user plane data sent from the interception targets or to be forwarded to the interception targets, and the interception NE (83) further comprises:
a classifying unit, adapted to classify the user plane data received by the receiving unit (91) based on traffic flows according to service feature information;and
an adding unit, adapted to add a service associated identifier to the user plane data classified by the classifying unit, wherein the service associated identifier is adapted to identify the traffic flow of the user plane data;
wherein the sending unit (93) is further adapted to report the user plane data with the service associated identifier added by the adding unit.

13. The interception NE (83) according to claim 11 or 12, further comprising:
a priority discrimination unit, adapted to discriminate priorities of the interception targets, wherein the sending unit (93) is further adapted to report all the user plane data of the interception target with a high interception priority, when congestion occurs in an interception reporting path; or
an interception significance level dividing unit, adapted to divide interception significance levels of the interception targets, wherein the sending unit (93) is further adapted to preferentially report the user plane data of service sessions with high interception significance levels of the interception targets, when congestion occurs in an interception reporting path; or
an interception target class configuration unit, adapted to configure a service session type for being reported to an interception center (81) for each interception target class, wherein the sending unit (93) is further adapted to report the user plane data of the service session type configured for the interception target class according to the interception target class; or
a service session condition matching unit, adapted to designate a service session matching condition of each interception target, wherein the sending unit (93) is further adapted to report the user plane data of service sessions satisfying the service session matching condition of the interception targets.

## Patentansprüche

1. Verfahren zur rechtmäßigen Überwachung, das Folgendes umfasst:
Überwachen von Überwachungszielen durch ein Überwachungsnetzelement, Überwachungs-NE, nach dem Empfangen einer Überwachungsaufgabe; und
Berichten (103) von Anwenderebenendaten entsprechender Dienstsitzungen der Überwachungsziele, die eine konfigurierte Überwachungsberichtsstrategie in Übereinstimmung mit der empfangenen Überwachungsaufgabe und der konfigurierten Überwachungsberichtsstrategie erfüllen, durch das Überwachungs-NE, wenn in einem Überwachungsberichtspfad Überlast auftritt, wobei die konfigurierte Überwachungsberichtsstrategie das Kennzeichnen von Überwachungsprioritäten der Überwachungsziele und das Berichten der vollständigen Anwenderebenendaten nur der Überwachungsziele mit hoher Überwachungspriorität umfasst.

2. Verfahren zur rechtmäßigen Überwachung nach Anspruch 1, wobei die Überwachungsberichtsstrategie ferner Folgendes umfasst:
Konfigurieren von Überwachungssignifikanzebenen unterschiedlicher Typen von Dienstsitzungen und bevorzugtes Berichten der Anwenderebenendaten signifikanter Dienstsitzungen des Überwachungsziels mit niedriger Überwachungspriorität zusammen mit den vollständigen Anwenderebenendaten der Überwachungsziele mit hoher Überwachungspriorität durch das Überwachungs-NE.

3. Verfahren zur rechtmäßigen Überwachung nach Anspruch 1 oder 2, wobei eine Art der Konfiguration der Überwachungsberichtsstrategie wenigstens eines aus Folgendem umfasst:
Empfangen der Überwachungsaufgabe, die die Überwachungsberichtsstrategie führt, die den Überwachungszielen zugeordnet ist, durch das Überwachungs-NE;
vorab Empfangen der Überwachungsberichtsstrategie, die den Dienstsitzungstypen zugeordnet ist, durch das Überwachungs-NE; und
vorab Konfigurieren der Überwachungsberichtsstrategie, die den Dienstsitzungstypen zugeordnet ist, auf dem Überwachungs-NE.

4. Verfahren zur rechtmäßigen Überwachung nach Anspruch 1, wobei die durch das Überwachungs-NE empfangene Überwachungsaufgabe von einem Überwachungszentrum direkt zu dem Überwachungs-NE gesendet wird; oder die durch das Überwachungs-NE empfangene Überwachungsaufgabe von einem Überwachungszentrum zu einem Überwachungs-"Gateway" gesendet wird und durch das Überwachungs-"Gateway" zu dem Überwachungs-NE weitergeleitet wird.

5. Verfahren zur rechtmäßigen Überwachung nach Anspruch 1, wobei das Überwachungs-NE die Anwenderebenendaten der Überwachungsziele direkt zu einem Überwachungszentrum berichtet; oder
das Überwachungs-NE die Anwenderebenendaten der Überwachungsziele zu einem Überwachungs-"Gateway" berichtet (702) und das Überwachungs-"Gateway" die Anwenderebenendaten zu einem Überwachungszentrum weiterleitet.

6. Verfahren zur rechtmäßigen Überwachung nach Anspruch 1, wobei das Überwachungs-NE ein Paketdaten-"Gateway" ist und das Verfahren ferner Folgendes umfasst:
Klassifizieren von Anwenderebenendaten, die durch den Paketdaten-"Gateway" weitergeleitet und durch die Überwachungsziele gesendet oder empfangen werden, durch das Paketdaten-"Gateway" basierend auf Verkehrsströmen; und
Hinzufügen durch das Paketdaten-"Gateway" einer dem Dienst zugeordneten Kennung zu den klassifizierten Anwenderebenendaten, wobei die dem Dienst zugeordnete Kennung ausgelegt ist, den Verkehrsstrom der Anwenderebenendaten zu identifizieren.

7. Verfahren zur rechtmäßigen Überwachung nach Anspruch 6, das ferner Folgendes umfasst:
Empfangen der von einem Überwachungszentrum gesendeten Überwachungsaufgabe durch ein bedienendes Anwendungs-"Gateway";
Analysieren einer Dienstaufbauanforderung zum Einleiten einer Verbindung durch das Überwachungsziel oder Rufen des Überwachungsziels in Übereinstimmung mit der Überwachungsaufgabe durch das bedienende Anwendungs-"Gateway", Erhalten von Dienstmerkmalsinformationen und Erzeugen der dem Dienst zugeordneten Kennung in Übereinstimmung mit den Dienstmerkmalsinformationen; und
Berichten der Dienstaufbauanforderung zu dem Überwachungszentrum durch das bedienende Anwendungs-"Gateway", wobei die Dienstaufbauanforderung einen Teil der oder alle aufbauenden Felder in den Dienstmerkmalsinformationen führt, und Zustellen der Dienstaufbauanforderung zu dem Paketdaten-"Gateway", wobei die Dienstaufbauanforderung einen Teil der oder alle aufbauenden Felder in den Dienstmerkmalsinformationen enthält.

8. Verfahren zur rechtmäßigen Überwachung nach Anspruch 7, wobei das Erzeugen der dem Dienst zugeordneten Kennung in Übereinstimmung mit den Dienstmerkmalsinformationen durch das bedienende Anwendungs-"Gateway" eines des Folgenden umfasst:
Erzeugen der dem Dienst zugeordneten Kennung durch das bedienende Anwendungs-"Gateway" durch Verwenden einer Intemetprotokoll-Multimediateilsystem-Gebührenberechnungskennung, IP-IMS-Gebührenberechnungskennung, in den Dienstmerkmalsinformationen;
Erzeugen der dem Dienst zugeordneten Kennung durch das bedienende Anwendungs-"Gateway" durch gemeinsames Verwenden einer IMS-Gebührenberechnungskennung und einer Medienstromnummer in den Dienstmerkmalsinformationen; und
Erzeugen der dem Dienst zugeordneten Kennung durch das bedienende Anwendungs-"Gateway" durch gemeinsames Verwenden einer IMS-Gebührenberechnungskennung, einer Medienstromnummer und einer IP-Stromnummer in den Dienstmerkmalsinformationen.

9. Verfahren zur rechtmäßigen Überwachung nach Anspruch 7, wobei das Zustellen der Dienstaufbauanforderung zu dem Paketdaten-"Gateway" durch das bedienende Anwendungs-"Gateway" Folgendes umfasst:
Zustellen der Dienstaufbauanforderung durch das bedienende Anwendungs-"Gateway" zu einem Strategieentscheidungspunkt; und
Zustellen der aufbauenden Felder in den Dienstmerkmalsinformationen durch den Strategieentscheidungspunkt zu dem Paketdaten-"Gateway" in Übereinstimmung mit Anwenderabonnementinformationen und lokaler Strategie.

10. Verfahren zur rechtmäßigen Überwachung nach einem der Ansprüche 7 bis 9, das ferner Folgendes umfasst:
Auswählen von Dienstmerkmalsinformationen, die der dem Dienst zugeordneten Kennung entsprechen, in Übereinstimmung mit der dem Dienst zugeordneten Kennung der Anwenderebenendaten durch das Überwachungszentrum; und
Analysieren und Wiederherstellen der Anwenderebenendaten in Übereinstimmung mit Dienstmerkmalsinformationen durch das Überwachungszentrum.

11. Überwachungs-Netzelement, Überwachungs-NE, (83), das ausgelegt ist, Anwenderebenendaten von Überwachungszielen zu berichten, und das Folgendes umfasst:
eine Empfangseinheit (91), die ausgelegt ist, eine Überwachungsaufgabe zum Überwachen von Überwachungszielen zu empfangen;
eine Überwachungsberichtsstrategieeinheit (92), die ausgelegt ist, eine Überwachungsberichtsstrategie zu speichern; und
eine Sendeeinheit (93), die ausgelegt ist, Anwenderebenendaten von entsprechenden Dienstsitzungen der Überwachungsziele, die die Überwachungsberichtsstrategie in Übereinstimmung mit der Überwachungsberichtsstrategie in der Überwachungsberichtsstrategieeinheit erfüllen, zu berichten wenn in einem Überwachungsberichtspfad Überlast auftritt, wobei die konfigurierte Überwachungsberichtsstrategie das Kennzeichnen von Überwachungsprioritäten der Überwachungsziele und das Berichten der vollständigen Anwenderebenendaten nur der Überwachungszielen mit hoher Überwachungspriorität umfasst.

12. Überwachungs-NE (83) nach Anspruch 11, wobei die Empfangseinheit (91) ferner ausgelegt ist, die von den Überwachungszielen gesendeten oder zu den Überwachungszielen weiterzuleitenden Anwenderebenendaten zu empfangen, und wobei das Überwachungs-NE (83) ferner Folgendes umfasst:
eine Klassifizierungseinheit, die ausgelegt ist, die Anwenderebenendaten, die durch die Empfangseinheit (91) empfangen werden, basierend auf Verkehrsströmen in Übereinstimmung mit Dienstmerkmalsinformationen zu klassifizieren; und
eine Hinzufügungseinheit, die ausgelegt ist, eine dem Dienst zugeordnete Kennung den durch die Klassifizierungseinheit klassifizierten Anwenderebenendaten hinzuzufügen, wobei die dem Dienst zugeordnete Kennung ausgelegt ist, den Verkehrs strom der Anwenderebenendaten zu identifizieren;
wobei die Sendeeinheit (93) ferner ausgelegt ist, die Anwenderebenendaten mit der durch die Hinzufügungseinheit hinzugefügten dem Dienst zugeordneten Kennung zu berichten.

13. Überwachungs-NE (83) nach Anspruch 11 oder 12, das ferner Folgendes umfasst:
eine Prioritätsunterscheidungseinheit, die ausgelegt ist, die Prioritäten der Überwachungsziele zu unterscheiden, wobei die Sendeeinheit (93) ferner ausgelegt ist, die vollständigen Anwenderebenendaten des Überwachungsziels mit einer hohen Überwachungspriorität zu berichten, wenn in einem Überwachungsberichtspfad Überlast auftritt; oder
eine Überwachungssignifikanzebenenunterteilungseinheit, die ausgelegt ist, Überwachungssignifikanzebenen der Überwachungsziele zu unterteilen, wobei die Sendeeinheit (93) ferner ausgelegt ist, bevorzugt die Anwenderebenendaten von Dienstsitzungen mit hohen Überwachungssignifikanzebenen der Überwachungsziele zu berichten, wenn in einem Überwachungsberichtspfad Überlast auftritt; oder
eine Überwachungszielklassenkonfigurationseinheit, die ausgelegt ist, für jede Überwachungszielklasse einen Dienstsitzungstyp zu konfigurieren, um zu einem Überwachungszentrum (81) berichtet zu werden, wobei die Sendeeinheit (93) ferner ausgelegt ist, die Anwenderebenendaten des Dienstsitzungstyps, der für die Überwachungszielklasse konfiguriert ist, in Übereinstimmung mit der Überwachungszielklasse zu berichten; oder
eine Dienstsitzungsbedingungsabgleicheinheit, die ausgelegt ist, eine Dienstsitzungsabgleichbedingung jedes Überwachungsziels festzulegen, wobei die Sendeeinheit (93) ferner ausgelegt ist, die Anwenderebenendaten von Dienstsitzungen, die die Dienstsitzungsabgleichbedingung der Überwachungsziele erfüllen, zu berichten.

## Revendications

1. Procédé d'interception licite comprenant les étapes suivantes :
intercepter, par un élément de réseau d'interception, NE, des cibles d'interception, après réception d'une tâche d'interception ; et
rapporter (103), lorsqu'une congestion se produit dans un chemin de rapport d'interception, par le NE d'interception, des données de plan d'utilisateur de sessions de service correspondantes des cibles d'interception satisfaisant à une politique de rapport d'interception configurée conformément à la tâche d'interception reçue et à la politique de rapport d'interception configurée, où la politique de rapport d'interception configurée comprend de désigner des priorités d'interception des cibles d'interception et de rapporter toutes les données de plan d'utilisateur uniquement parmi les cibles d'interception ayant une priorité d'interception élevée.

2. Procédé d'interception licite selon la revendication 1, dans lequel la politique de rapport d'interception comprend en outre les étapes suivantes :
configurer des niveaux de signification d'interception de différents types de sessions de service et rapporter, par le NE d'interception, préférentiellement, les données de plan d'utilisateur de sessions de service signifiantes de la cible d'interception ayant une faible priorité d'interception avec toutes les données de plan d'utilisateur des cibles d'interception ayant une priorité d'interception élevée.

3. Procédé d'interception licite selon la revendication 1 ou la revendication 2, dans lequel une manière de configurer la politique de rapport d'interception comprend au moins une des étapes suivantes :
recevoir, par le NE d'interception, la tâche d'interception acheminant la politique de rapport d'interception associée aux cibles d'interception ;
recevoir, par le NE d'interception, la politique de rapport d'interception associée aux types de sessions de service, en avance ; et
configurer la politique de rapport d'interception associée aux types de sessions de service sur le NE d'interception, en avance.

4. Procédé d'interception licite selon la revendication 1, dans lequel :
la tâche d'interception reçue par le NE d'interception est directement envoyée depuis un centre d'interception au NE d'interception ; ou
la tâche d'interception reçue par le NE d'interception est envoyée depuis un centre d'interception à une passerelle d'interception, et est transférée au NE d'interception par la passerelle d'interception.

5. Procédé d'interception licite selon la revendication 1, dans lequel le NE d'interception rapporte directement les données de plan d'utilisateur des cibles d'interception à un centre d'interception ; ou
le NE d'interception rapporte (702) les données de plan d'utilisateur des cibles d'interception à une passerelle d'interception, et la passerelle d'interception retransmet les données de plan d'utilisateur à un centre d'interception.

6. Procédé d'interception licite selon la revendication 1, dans lequel le NE d'interception est une passerelle de données en paquets, et le procédé comprend en outre les étapes suivantes :
classer, par la passerelle de données en paquets, des données de plan d'utilisateur retransmises par la passerelle de données en paquets et envoyées ou reçues par les cibles d'interception sur la base de flux de trafic ; et
ajouter, par la passerelle de données en paquets, un identifiant associé à un service aux données de plan d'utilisateur classées, où l'identifiant associé à un service est conçu pour identifier le flux de trafic des données de plan d'utilisateur.

7. Procédé d'interception licite selon la revendication 6, comprenant en outre les étapes suivantes :
recevoir, par une passerelle de desserte d'applications, la tâche d'interception envoyée depuis un centre d'interception ;
analyser, par la passerelle de desserte d'applications, une demande d'établissement de service comprenant de lancer un appel par la cible d'interception ou d'appeler la cible d'interception conformément à la tâche d'interception, d'obtenir des informations de caractéristique de service et de générer l'identifiant associé au service conformément aux informations de caractéristique de service ; et
rapporter, par la passerelle de desserte d'applications, la demande d'établissement de service au centre d'interception, où la demande d'établissement de service achemine une partie ou l'intégralité des champs constituants des informations de caractéristique de service, et délivrer la demande d'établissement de service à la passerelle de données en paquets, où la demande d'établissement de service comprend une partie ou l'intégralité des champs constituants des informations de caractéristique de service.

8. Procédé d'interception licite selon la revendication 7, dans lequel la génération, par la passerelle de desserte d'applications, de l'identifiant associé au service conformément aux informations de caractéristique de service, comprend une des étapes suivantes :
générer, par la passerelle de desserte d'applications, l'identifiant associé au service en adoptant un identifiant de chargement de sous-système multimédia, IMS, basé sur le protocole Internet, IP, dans les informations de caractéristique de service ;
générer, par la passerelle de desserte d'applications, l'identifiant associé au service en adoptant, ensemble, un identifiant de chargement IMS et un numéro de flux de média dans les informations de caractéristique de service ; et générer, par la passerelle de desserte d'applications, l'identifiant associé au service en adoptant, ensemble, un identifiant de chargement IMS, un numéro de flux de média et un numéro de flux IP dans les informations caractéristique de service.

9. Procédé d'interception licite selon la revendication 7, dans lequel la délivrance, par la passerelle de desserte d'applications, de la demande d'établissement de service à la passerelle de données en paquets, comprend les étapes suivantes :
délivrer, par la passerelle de desserte d'applications, la demande d'établissement de service à un point de décision de politique ; et
délivrer, par le point de décision de politique, les champs constituants des informations de caractéristique de service à la passerelle de données en paquets conformément à des informations d'abonnement d'utilisateur et à une politique locale.

10. Procédé d'interception licite selon l'une quelconque des revendications 7 à 9, comprenant en outre les étapes suivantes :
sélectionner, par le centre d'interception, des informations de caractéristique de service correspondant à l'identifiant associé au service conformément à l'identifiant associé au service des données de plan d'utilisateur ; et
analyser et restaurer, par le centre d'interception, les données de plan d'utilisateur conformément aux informations de caractéristique de service.

11. Elément de réseau d'interception, NE, (83) conçu pour rapporter des données de plan d'utilisateur de cibles d'interception, comprenant :
une unité de réception (91), conçue pour recevoir une tâche d'interception comprenant d'intercepter des cibles d'interception ;
une unité de politique de rapport d'interception (92), conçue pour stocker une politique de rapport d'interception ; et
une unité d'envoi (93), conçue pour rapporter, lorsqu'une congestion se produit dans un chemin de rapport d'interception, des données de plan d'utilisateur de sessions de service correspondantes des cibles d'interception satisfaisant à la politique de rapport d'interception conformément à la politique de rapport d'interception dans l'unité de politique de rapport d'interception, où la politique de rapport d'interception configurée comprend de désigner des priorités d'interception des cibles d'interception et de rapporter toutes les données de plan d'utilisateur uniquement parmi les cibles d'interception avec une priorité d'interception élevée.

12. NE d'interception (83) selon la revendication 11, dans lequel l'unité de réception (91) est en outre conçue pour recevoir les données de plan d'utilisateur envoyées depuis les cibles d'interception ou à retransmettre aux cibles d'interception, et le NE d'interception (83) comprend en outre :
une unité de classement conçue pour classer les données de plan d'utilisateur reçues par l'unité de réception (91) sur la base de flux de trafic conformément à des informations de caractéristique de service ; et
une unité d'ajout, conçue pour ajouter un identifiant associé à un service aux données de plan d'utilisateur classées par l'unité de classement, où l'identifiant associé au service est conçu pour identifier le flux de trafic des données de plan d'utilisateur ;
où l'unité d'envoi (93) est en outre conçue pour rapporter les données de plan d'utilisateur avec l'identifiant associé au service ajouté par l'unité d'ajout.

13. NE d'interception (83) selon la revendication 11 ou la revendication 12, comprenant en outre :
une unité de discrimination des priorités, conçue pour discriminer les priorités des cibles d'interception, où l'unité d'envoi (93) est en outre conçue pour rapporter toutes les données de plan d'utilisateur de la cible d'interception ayant une priorité d'interception élevée lorsqu'une congestion se produit dans un chemin de rapport d'interception ; ou
une unité de division de niveau de signification d'interception, conçue pour diviser des niveaux de signification d'interception des cibles d'interception, où l'unité d'envoi (93) est en outre conçue pour rapporter préférentiellement les données de plan d'utilisateur de sessions de service ayant des niveaux de signification d'interception élevés des cibles d'interception, lorsqu'une congestion se produit dans un chemin de rapport d'interception ; ou
une unité de configuration de classe de cible d'interception, conçue pour configurer un type de session de service pour être rapporté à un centre d'interception (81) pour chaque classe de cible d'interception, où l'unité d'envoi (93) est en outre conçue pour rapporter les données de plan d'utilisateur du type de session de service configuré pour la classe de cible d'interception conformément à la classe de cible d'interception ; ou
une unité de correspondance de condition de session de service, conçue pour désigner une condition de correspondance de session de service de chaque cible d'interception, où l'unité d'envoi (93) est en outre conçue pour rapporter les données de plan d'utilisateur des sessions de service satisfaisant à de la condition de correspondance de session de service des cibles d'interception.
